# EUROPEAN PATENT APPLICATION

(11) **EP 3 093 062 A1**
(43) Date of publication of application: **16.11.2016**
(21) Application number: 14878063.8
(22) Date of filing: 30.09.2014
(51) Int. Cl.: B01D 53/78, B01D 53/50

(54) **METHOD FOR EFFICIENTLY REMOVING ACID GAS SULFIDE BY USING DESULFURIZATION TECHNOLOGY IN AMMONIA METHOD**

(30) Priority: 07.01.2014 CN 201410006886
(71) Applicant: Jiangsu New Century Jiangnan Environmental Protection CO,. LTD., Nanjing, Jiangsu 211100 (CN)
(72) Inventor: LUO, Jing, Nanjing Jiangsu 211100 (CN); QI, Lifang, Nanjing Jiangsu 211100 (CN); XU, Changxiang, Nanjing Jiangsu 211100 (CN); LUO, Yongying, Nanjing Jiangsu 211100 (CN); FU, Guoguang, Nanjing Jiangsu 211100 (CN); GAO, Ruihua, Nanjing Jiangsu 211100 (CN)
(74) Representative: Grünecker Patent- und Rechtsanwälte PartG mbB
(86) International application number: PCT/CN2014/087887
(87) International publication number: WO 2015/103892

(57) **Abstract**

A method for effectively removing acidic sulfide gas using ammonia-based desulfurization includes the following steps of: 1) pre-treatment, wherein sulfide in acid gas undergoes through pre-treatment methods of sulfur recovery, acid making or/and incineration to convert remaining sulfur in the acid gas into sulfur oxides, and the acid tail gas with sulfur oxides is obtained; and the acid gas is derived from petrochemical industry, natural gas chemical industry, coal chemical industry, etc.; 2) ammonia absorption of sulfur oxides, wherein the acid tail gas with sulfur oxides is allowed to flow into an ammonia absorption apparatus, and a cyclic absorption solution is used to absorb sulfur oxides; and 3) post-treatment of ammonium sulfate, wherein a saturated or nearly saturated absorption solution undergoes concentration, crystallization, solid-liquid separation, and drying to obtain a solid product of ammonium sulfate. Sulfur oxides (including sulfur dioxide, sulfur trioxide and hydrates thereof) in the acid tail gas are removed and sulfuric acid, sulfur and ammonium sulfate are byproduced, and the cleaned gas is discharged upon meeting the emission standard.

## Description

### I. Technical Field

This invention relates to a method for effectively removing acidic sulfide gas (including hydrogen sulfide, sulfur dioxide, carbon oxide sulfide (COS), and carbon disulfide (CS₂), the same applies below) generated in industries such as petrochemical industry, natural gas chemical industry, coal chemical industry, shale oil chemical industry, shale gas chemical industry, sulfuric acid industry, etc. using ammonia-based desulfurization, and specifically relates to a cleaning method in which after the pre-treatment process of acid gas, sulfur oxides (including sulfur dioxide, sulfur trioxide and hydrates thereof, the same applies below) in the acid tail gas are removed by using aqueous ammonia or liquid ammonia as an absorbent, and sulfuric acid, sulfur and ammonium sulfate are by-produced, and the cleaned gas is discharged upon meeting the emission standard. The cleaning method generates no waste gas, waste water or waste solids, and can be applied to industries such as chemical, environmental, power, metallurgical, papermaking, etc.

### II. Background Art

Acid gases refers to process gases comprising sulfur-containing substances such as hydrogen sulfide, sulfur oxides, organosulfur compounds, etc., which come from petrochemical industry, natural gas chemical industry, coal chemical industry, shale oil chemical industry, shale gas chemical industry, sulfuric acid tail gas, etc. Hazardous components in acid gases are hydrogen sulfide, sulfur dioxide, carbonyl sulfide, carbon disulfide, etc. with high concentration. Acid gases need to be treated to meet the emission standard.

There are many pretreatment technologies for acid gas containing sulfides, such as conventional Claus technology, dry gas sulfuric acid technology, FCC regeneration flue gas treatment technology, incineration technology, wet gas sulfuric acid technology, and SuperClaus technology.

After the above pre-treatment, acid gas still cannot meet the environmental protection emission standards and cannot be directly emitted without further treatment. Such further treatment technologies include EuroClaus technology, SCOT technology, amine technology, bio-desulfurization technology, wet gas sulfuric acid technology, Belco technology, activated carbon technology, etc. Increasingly stringent environmental protection emission standard for sulfur requires continued increase in sulfur recovery, i.e., achieving a sulfur recovery of 99.9% or more and sulfur oxides concentration in tail gas within 100 mg/Nm³, or even below 50 mg/Nm³.

In the prior art, some methods for removing sulfide effectively form acid gas have been described. In CN200910188118, disclosed is a method for desulfurizing high-concentration flue gas using sodium desulfurization while recycling the byproduct of sodium sulfite, in which deoxygenation is required before flue gas desulfurization. The concentration of sulfur dioxide in the flue gas is 10,000-100,000 mg/m³ with the oxygen content of 2,000-10,000 mg/m³, and the sulfur dioxide concentration after the treatment is less than 200 mg/m³. Compared to the conventional sodium sulfite method, a part of the sulfur dioxide will be converted into low-value, low-concentration sulfuric acid, which is discharged during the deoxygenation step. Thus, the recovery of sulfur dioxide in the flue gas is reduced. In addition, the sodium sulfite product is in low purity and the operating cost of this process is high..

A bio-desulfurization technology was described in CN200580011908.X, which desulfurized gas and sulfur products were obtained through bio-desulfurization of Claus tail gas. The main process is described as the following: tail gas goes through an absorber to contact with a lean solvent to obtain desulfurized gas and a rich solvent. The rich solvent is allowed to flow into a bioreactor device to biologically oxidize dissolved hydrogen sulfide in order to obtain sulfur products and lean solvent. The concentration of the hydrogen sulfide in the cleaned gas can be less than 10 ppm. This method requires high capital and the operation is difficult. In addition, this process generates waste liquid and it is difficult to maintain a stable biological activity in the bioreactor.

The Cansolv process is described in US5019361. The concentration of sulfur dioxide is 700-5,000 ppmv, the mass concentration of organic amine solution is no less than 20%, and the temperature of the absorption solution is 10°C-50°C. In the process, over 100g of sulfur dioxide is absorbed in every 1,000g of the absorption solution. The desorption temperature is 70°C-90°C, and 4g-10g of steam is consumed to desorb 1g of sulfur dioxide. The method requires high capital investment and high energy consumption and discharges waste acid.

A two-stage Claus and SCOT treatment process is described in CN201010519504.6. SCOT process includes reduction step and absorption step. In reduction step, all sulfur-containing compounds in the tail gas are reduced to hydrogen sulfide. The absorption step includes the followings: condensing and removing water in process gas, selectively removing hydrogen sulfide with amine, recycling rich amine solution after regeneration, and sending the regenerated acid gas back to the Claus unit. The total sulfur emission from the treated tail gas is less than 300 ppmv The method requires high capital and operating cost, and the tail gas emission cannot meet the latest environmental protection standards.

CN201210288895 describes a method of treating tail gas in Claus process. Tail gas containing sulfur dioxide, oxygen and water from the Claus process is fed into a reactor filled with a porous carbon desulfurization reagent. At a reaction temperature of 30°C-150°C, catalytic oxidation between sulfur dioxide and water in the tail gas occurs on the surface of porous carbon forming sulfuric acid, while a regeneration washing agent is allowed to flow into the reactor continuously. This method has a desulfurization efficiency of up to 93% and the tail gas emission thereof cannot meet higher environmental protection standards, and the low-concentration sulfuric acid by-produced is difficult to be utilized. Thus, the tail gas from the multi-stage Claus process still cannot meet emission standards. In general, when acid gas comes from coal chemical and coking processes, the content of sulfur in coal is high and, therefore, the Claus process is used for acid gas pre-treatment.

Methods effectively removing acidic sulfide gas using ammonia-based desulfurization were covered in a series of granted patents of the present applicant with respect to ammonia-based desulfurization, such as CN200510040801.1, CN03158258.3, CN201010275966.8, CN200510040800.7 and CN03158257.5. These methods solve the desulfurization problems in large-scale coal-fired power plants. According to the concentration of sulfur dioxide in acid tail gas, air is supplemented to make the concentration of sulfur dioxide meet the suitable absorption condition. In CN2013101302254 of the present applicant, acid tail gas ammonia desulfurization treatment method, , air is also required to be supplied into the device so that the sulfur dioxide concentration of acid tail gas is no more than 30,000 mg/Nm³, and thus treatment is further performed.

### III. Summary of the Invention

This invention aims to put forward a method for effectively removing acidic sulfide gas (including hydrogen sulfide, sulfur dioxide, carbonyl sulfide, carbon disulfide, etc., the same applies below) generated from the production process of some industries such as petrochemical industry, natural gas chemical industry, coal chemical industry, shale oil chemical industry, shale gas chemical industry, and sulfuric acid industry, by using ammonia-based desulfurization. Acid gas is completely purified to ensure that the cleaned gas meets the domestic emission standards, or even the most stringent environmental protection emission standards worldwide, and achieves effective cleaning of acid gas. In addition, this method has the advantages of simple process flow, ease of operation and stable operating condition. This method also avoids some of the defects from other existing technologies.

The technical solution of this invention is to use ammonia desulfurization technology to remove sulfide effectively from acid gas. The features of this invention can be described as the following steps.
1) pre-treatment, wherein sulfide in acid gas undergoes pre-treatment of sulfur recovery, acid making or/and incineration and the like to convert remaining sulfur in the acid gas into sulfur oxides, and acid tail gas with sulfur oxides is obtained; and the acid gas is derived from industrial tail gas of petrochemical industry, natural gas chemical industry, coal chemical industry, shale oil chemical industry, shale gas chemical industry, sulfuric acid industry, etc.;
2) ammonia absorption of sulfur oxides, wherein the acid tail gas with sulfur oxides is allowed to flow into an ammonia absorbing apparatus, a circulating absorption solution is used to absorb sulfur oxides, parameters of the absorption solution are adjusted according to the removal amount of sulfur oxides and the concentration of sulfur oxides, and the treated cleaned gas is discharged upon meeting the emission standard; and
3) post-treatment of ammonium sulfate, wherein a saturated or nearly saturated absorption solution fully absorbing sulfur oxides undergoes concentration, crystallization, solid-liquid separation, drying, and packaging to obtain a solid product of ammonium sulfate;

Furthermore, the sulfur oxide concentration (converted into sulfur dioxide concentration for calculation, the same applies below) in acid tail gas is 500 to 30,000 mg/Nm³, which reduces the investment and operation cost for the pre-treatment devices, and improves the stability of the operation. When the sulfur oxide concentration in the acid tail gas is 500 to 30,000 mg/Nm³, the concentration of sulfur oxides in the cleaned gas is less than 50 mg/nm³, the concentration of free ammonia is less than 10 mg/Nm³, the ammonia recovery is more than 97%, and the desulfurization efficiency of the ammonia desulfurization device is 99.9% or more.

Furthermore, parameters of absorption solution such as composition, density and circulation flow are adjusted according to differences in the concentration of sulfur oxides and the absorbed amount of sulfur oxides to ensure that the desulfurization rate is over 99.9% while the investment and operation costs are minimized.

Furthermore, acid gas pre-treatment technologies are existing mature technologies or patented technologies, such as conventional Claus technology, dry gas sulfuric acid technology, incineration technology, FCC regeneration flue gas technology, wet gas sulfuric acid technology, SuperClaus technology and EuroClaus technology. Acid tail gases include sulfur recovery tail gas, sulfuric acid tail gas, incineration flue gas, FCC regeneration flue gas, etc.

Furthermore, when the sulfur oxide concentration in H₂S-free acid gas is less than 30,000 mg/Nm³, the acid gas is sent to ammonia desulfurization absorption device directly without pre-treatment.

Acid gas, especially when it is from coal-to-methanol or acetic acid process, a coal-to-SNG (Synthetic Natural Gas) (or coking) process, and a shale gas or oil exploitation and utilization process or natural gas exploitation process, wherein the acid tail gas obtained after pre-treatment undergoes ammonia desulfurization again within the scope of ammonia-based desulfurization, and wherein the desulfurization reagent is 5%-35% aqueous ammonia or liquid ammonia.

In particular, the acid gas comes from a coal-to-gas (or coking) device, and the pre-treatment of the acid gas is one of Claus processing technologies from one-stage to three-stage.

The desulfurization efficiency of the treatment method proposed by this invention is no less than 99.9%. The byproduct is ammonium sulfateand cleaned gas meets emission standards. The process is simple and requires low capital and operating cost.

The content of the process flow and the device for ammonia-based absorption of sulfur oxides according to this invention, which is not referred to, adopts existing disclosed technologies or series granted patents of the company with respect to ammonia-based desulfurization, such as CN200510040801.1, CN03158258.3, CN201010275966.8, CN200510040800.7 and CN03158257.5.

### Advantageous Effects of the Invention:

This invention relates to a method for effectively removing acidic sulfide gas using ammonia-based desulfurization technology (including hydrogen sulfide, sulfur dioxide, COS, and carbon disulfide (CS₂), the same applies below) generated in industries such as petrochemical industry, natural gas chemical industry, coal chemical industry, shale oil chemical industry, shale gas chemical industry, sulfuric acid industry, etc, and specifically relates to a cleaning method in which after the pre-treatment process of acid gas, sulfur oxides (including sulfur dioxide, sulfur trioxide and hydrates thereof, the same applies below) in the acid tail gas are removed by using aqueous ammonia or liquid ammonia as an absorbent, and sulfuric acid, sulfur and ammonium sulfate are by-produced, and the cleaned gas is discharged upon meeting the emission standard. The cleaning method has no waste gas, waste water and waste residues discharged, and can be applied to industries such as chemical, environmental, power, metallurgical, papermaking, etc. Effectively removing sulfide from acid gas by using ammonia desulfurization has the advantages of high sulfur recovery, low investment, low operation cost without waste (gas, water, or solid) generation or secondary pollution.

This invention is applicable to various kinds of acid gases, especially to acid gas from coal-to-gas (or coking) processes. As sulfur in coal has not been pre-treated, it undergoes pre-treatment before the ammonia desulfurization, as well as acid gases from shale gas or oil exploitation and utilization project or natural gas exploitation process. Higher overall desulfurization efficiency and lower cost can be achieved when the acid tail gas obtained after the pre-treatment is subject to comprehensive desulfurization within the scope of ammonia desulfurization. Because ammonia desulfurization is used in the subsequent process to ensure the removal efficiency, pre-treatment technologies can be conventional methods, and it can be methods with high return on investment (ROI). The concentration of sulfur oxides in the cleaned gas is less than 50 mg/Nm³, which can meet increasingly stringent environmental requirements. Ammonium sulfate, the byproduct in this invention, can be sold directly, and it causes no secondary pollution with less investment and cost, as well as simple operation.

Compared to technologies such as EuroCIaus, SCOT, organic amine, activated carbon, Belco, bio-desulfurization, Cansolv, wet gas sulfuric acid, etc., the investment of ammonia desulfurization devices in this invention is 30-50% less.

Compared to technologies such as EuroClaus, SCOT, amine, activated carbon, Belco, bio-desulfurization, Cansolv, wet gas sulfuric acid, the operation cost of ammonia desulfurization devices in this invention is 20-40% less.

Features of this invention also include that it requires less capital and operation cost to achieve over 99.9% total sulfur recovery, which means that its desulfurization efficiency (ammonia desulfurization) is no less than 99.9% without secondary pollution. In addition, it ensures cleaned gas emission to meet the environmental protection standards and high environmental requirements, achieving high efficiency cleaning of acid gas. The invention features simple process, good operability, and stable operation. Pre-treatment technologies can be mature ones known to the industry, or newly developed technologies of patent applications. Because of the high desulfurization efficiency of ammonia desulfurization devices, the sulfur recovery of the pre-treatment devices can be lowered, resulting in less capital and operating cost to the pre-treatment device.

Acid gas cleaning method used in this invention ensures that cleaned gas meets the emission standards, or even most stringent environment protection emission requirements worldwide, and it achieves effective cleaning of acid gas. In addition, the technology requires simple process with good operability, and the device maintains stable operation, and eliminates the defects in other existing processes, which characterizes its own unique features. In addition, this method disclosed in the invention is much better than other desulfurization methods such as "pre-treatment + SCOT" and "pre-treatment + bio-desulfurization".

### IV. Brief Description of the Drawings

Figure 1 is the flow chart showing the method for effectively removing sulfide from acid gas using ammonia desulfurization technology.
Figure 2 is the flow chart showing acid gas desulfurization treatment devices for a coal chemical project.
Figure 3 is the flow chart showing acid gas treatment devices for a coal-to-SNG (Synthetic Natural Gas) process.
Figure 4 is the flow chart showing acid gas desulfurization treatment devices for a shale oil exploitation and utilization process.
Figure 5 is the flow chart showing acid gas desulfurization treatment devices for a shale gas exploitation and utilization process.
Figure 6 is the flow chart showing acid gas desulfurization treatment devices for a coal-to-liquids (CTL) process.
Figure 7 is the flow chart showing acid gas desulfurization treatment devices for a natural gas exploitation and utilization process.
Figure 8 is the flow chart showing acid gas desulfurization treatment devices for a chemical process.
Figure 9 is the flow chart showing acid gas desulfurization treatment devices for a papermaking process.
Figure 10 is the flow chart showing acid gas desulfurization treatment devices for an oil refining process.

### V. Description of Embodiments

The following examples are used to demonstrate this invention, but not to limit the scope of the invention.

The process of this invention is as the followings:

### 1. Pre-treatment

After the pre-treatment, the sulfur oxide concentration in the acid tail gas is 500 mg/Nm³ to 30000 mg/Nm³. Acid gases come from coal-to-methanol or acetic acid process, coal-to-SNG process, shale gas or oil exploitation and utilization process or natural gas exploitation process. When the concentration of sulfur oxides in the tail gas obtained after the treatment of one-stage Claus process exceeds 30,000mg/Nm³, the obtained acidic tail gas is subject to ammonia desulfurization in the scope of ammonia desulfurization after two-stage to three-stage Claus process treatment. The above Claus process may include conventional Claus technology and SuperClaus technology. However, from the comparison of the return on investment between new projects, this invention, particularly the pre-treatment, uses conventional Claus technology from one-stage to three-stage. Conventional Claus process has been widely used in this industry, and its cost can be well controlled, of which the detailed description is omitted.

### 2. Ammonia-based sulfur oxides absorption

1) Sulfur oxides are absorbed using absorption solution, which is replenished by ammoniation using liquid ammonia or aqueous ammonia, and removed from acid tail gas in absorber under the proper operating condition, with a removal efficiency of 99.9% or higher. The parameters such as the composition and the circulation flow of the absorption solution in the absorber are adjusted according to differences in the removal amount and the concentration of sulfur oxides in acid tail gas. After oxidation, concentration and crystallization, the absorption solution is sent to the ammonium sulfate post-treatment system. The typical characteristics are showing in the followings:
   1-1) sulfur dioxide concentration of the acid tail gas entering the absorber is no more than 30,000 mg/Nm³;
   1-2) process water spray cooling or ammonium sulfate solution spray cooling is set in the inlet duct of the absorber or inside the absorber in order to cool and wash raw tail gas. If ammonium sulfate solution spray cooling is used, the concentration of ammonium sulfate in the solution will be increased during the spray cooling process;
   1-3) an oxidation distribution device is set in the oxidation section inside the absorber to oxidize the desulfurization absorption solution;
   1-4) an absorption section is set inside the absorber to achieve desulfurization spray absorption via the distribution device for absorption solution containing ammonia, which is supplied by an ammonia storage tank;
   1-5) a water washing layer is set on the upper part of the absorption section inside the absorber, which washes off the absorption solution carried in the tail gas to reduce the loss of the absorption solution;
   1-6) A demister is set above the water washing layer inside the absorber to control the concentration of mist droplets in the cleaned gas.

The process flow of the described ammonia desulfurization treatment for acid tail gas is showing as the followings: the sulfur dioxide concentration of acid tail gas is adjusted via supplying air from the air blower to the raw flue gas duct, then the process gas flows into the absorber after being cooled by the cooling spray layer at the inlet of the absorber or the cooling spray layer of ammonium sulfate solution spray inside the absorber; after that, sulfur dioxide is removed after being cleaned by the absorption spraying layer inside the absorber; after washing and absorption in the water washing layer, and removing mist droplets in the process gas via the demister, the cleaned gas is discharged from the stack through the cleaned gas duct.

Absorption solution circulation can be a one-stage absorption solution circulation or a two-stage absorption solution circulation. The second stage absorption solution circulation system is the cooling spray, concentration and crystallization circulation, which cools the process gas by pumping ammonium sulfate solution with a cooling washing pump from the ammonium sulfate storage tank into the cooling washing spray layer inside the absorber and/or into cooling washing layer at the inlet of the absorber, while the ammonium sulfate solution being concentrated and even partially crystallized through evaporation.

The temperature of the flue gas entering the absorption spraying layer inside the absorber is no more than 80°C; the operating temperature of absorption spraying layer is no more than 65°C; and the temperature of the absorption solution is no more than 65°C.

The superficial gas velocity of the absorber is 1.5 m/s to 4 m/s; the liquid-to-gas ratio in the cooling washing layer is no more than 6 L/m³; the liquid-to-gas ratio in absorption layer is 1 L/m³ to 15 L/m³; and the concentration of ammonium sulfate solution is no less than 15%.

The ammonia-based tail gas treatment process applies to the acid tail gas from the Claus sulfur recovery process or the improved Claus sulfur recovery process, the cooling of the acid tail gas is cooled via air supplement, process water or/and ammonium sulfate solution.

### 2) Other operations within the absorber

In order to coordinate with the whole process, other supplementary operations, such as absorption solution oxidization and concentration, and aerosol control, are required.

### 3. Post-treatment of ammonium sulfate

After concentration and crystallization, ammonium sulfate solution is sent to the post-processing system. According to actual needs, the byproduct of ammonia absorption can be solid ammonium sulfate or ammonium sulfate solution.
4. No pre-treatment is needed if the concentration of sulfur oxides in the acid gas is less than 30,000 mg/Nm³, and the gas can go through sulfur oxide ammonia absorption directly.

### Examples:

### 1. Acid gas desulfurization treatment devices for a coal chemical project

Acid gas comes from a coal-to-methanol and acetic acid project. After the two-stage Claus process, the total amount of the acid tail gas (Claus tail gas) is 9,500 Nm³/h, the temperature is 195°C, the concentration of sulfur dioxide is 23,000 mg/Nm³ to 29,700 mg/Nm³, and the other components are nitrogen, carbon dioxide, water vapor, oxygen, etc. The pressure is 0.023 MPa (g), and the desulfurization reagent is 99.6% liquid ammonia.

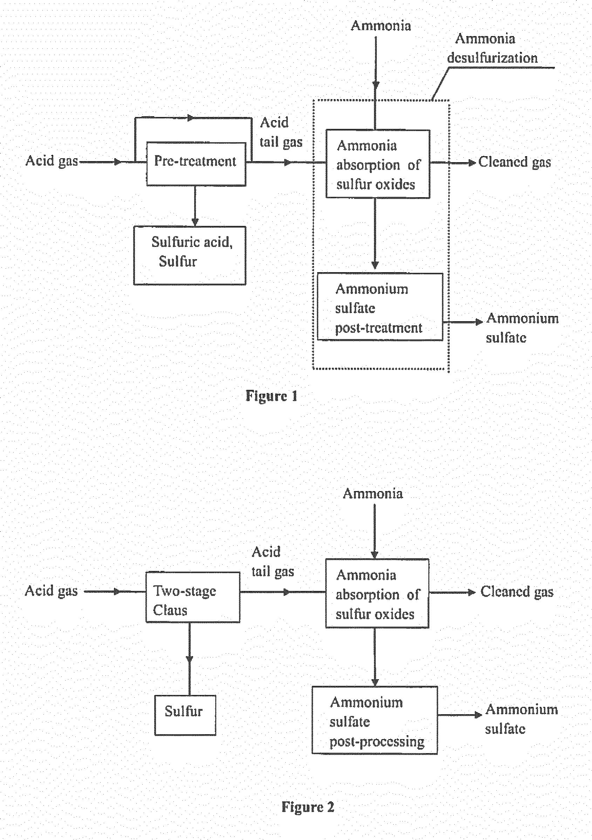

The process flow diagram is shown in Figure 2. The acid gas contains 30%-45% (by volume) hydrogen sulfide, all the sulfur in the acid gas is converted to elemental sulfur and sulfur dioxide after the pre-treatment, and sulfur dioxide concentration in acid tail gas after the pre-treatment meets the requirements for the ammonia absorption of the sulfur oxides. Compared to the EuroClaus process, the method for effectively removing acidic sulfide gas using ammonia-based desulfurization described in this invention is simpler and easier to control, and reduces investment and operation cost of the device. The cleaned gas meets emission standards and the process by-produces ammonium sulfate.

The ammonia recovery in this example is over 98.0%, the average concentration of sulfur oxides in the cleaned gas is 25.7 mg/Nm³, the concentration of free ammonia is 4.5 mg/Nm³, and the desulfurization efficiency is 99.91%.

The sulfur dioxide concentration of the acid tail gas at the inlet of the absorption device and the sulfur dioxide concentration of the cleaned gas at the outlet of the absorption device using sulfur oxides ammonia absorption are as the following:

| Sulfur dioxide concentration in acid tail gas (mg/Nm³) | Sulfur dioxide concentration in cleaned gas (mg/Nm³⁾ | Desulfurization efficiency (%) |
|---|---|---|
| 23,221 | 23.6 | 99.90 |
| 25,153 | 22.8 | 99.91 |
| 26,542 | 24.9 | 99.91 |
| 28,571 | 22.0 | 99.92 |
| 29,680 | 23.6 | 99.92 |

Comparison of acid tail gas desulfurization treatment processes is the following:

| Process | Ammonia desulfurization | EuroClaus |
|---|---|---|
| Investment, million RMB | 10.30 | 20.00 |
| Operation cost, million RMB | 3.50 | 6.00 |
| Average desulfurization efficiency, % | 99.91 | 93 |
| Average sulfur dioxide concentration in cleaned gas, mg/Nm³ | 23.4 | 2,000 |

### 2. Acid gas desulfurization treatment devices for a coal-to-SNG project

Acid gas comes from a coal-to-SNG project. After the two-stage Claus process treatment, the total amount of acid tail gas (Claus tail gas) is 32,000 Nm³/h, the temperature is 195°C, the concentration of sulfur dioxide is 21,000 mg/Nm³ to 29,800 mg/Nm³, and the other components are nitrogen, carbon dioxide, water vapor, oxygen, etc. The pressure is 0.023 MPa (g), and the desulfurization reagent is 11% to 21% of aqueous ammonia.

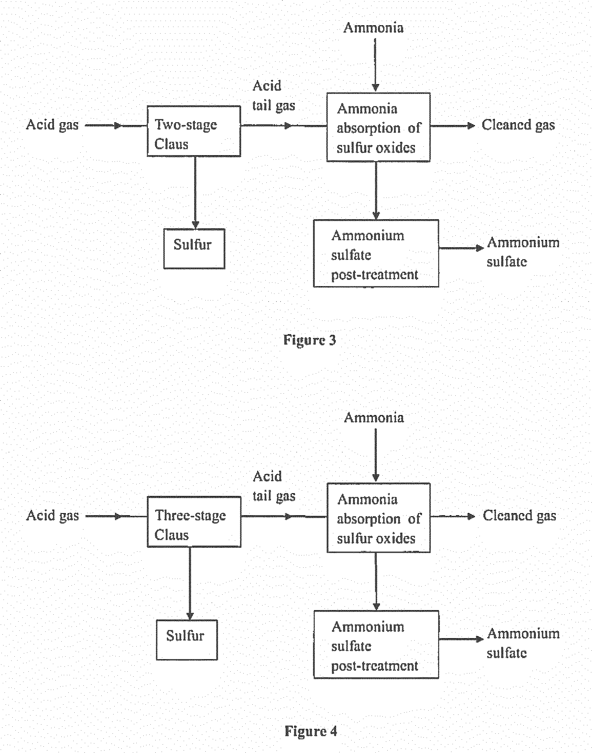

The process flow diagram is shown in Figure 3. The acid gas contains 30% to 40% (by volume) hydrogen sulfide, all sulfur in the acid gas is converted to elemental sulfur and sulfur dioxide after pre-treatment, and sulfur dioxide concentration in acid tail gas after pre-treatment meets the requirement for the ammonia absorption of the sulfur oxides. Compared to conventional SCOT process, the method for effectively removing acidic sulfide gas using ammonia-based desulfurization described in this invention is simpler and easier to control, and reduces investment and operating cost of the device. The cleaned gas meets emission standards and the process by-produces ammonium sulfate.

The ammonia recovery in this example is over 98.5%, the average concentration of sulfur oxides in the cleaned gas is 23.6 mg/Nm³, the concentration of free ammonia is 6.3 mg/Nm³, and the desulfurization efficiency is 99.9%.

The sulfur dioxide concentration of the acid tail gas at inlet of the absorption device and sulfur dioxide concentration of cleaned gas at outlet of the absorption device using sulfur oxides ammonia absorption are as the following:

| Sulfur dioxide concentration in acid tail gas (mg/Nm³) | Sulfur dioxide concentration in clean gas (mg/Nm³) | Desulfurization efficiency (%) |
|---|---|---|
| 21,253 | 19.5 | 99.91 |
| 23,729 | 23.7 | 99.90 |
| 25,347 | 25.5 | 99.90 |
| 28,571 | 26.8 | 99.91 |
| 29,870 | 22.7 | 99.92 |

Process comparison is as the following:

| Process | Ammonia desulfurization | Conventional SCOT |
|---|---|---|
| Investment, million RMB | 25.0 | 55.0 |
| Operation cost, million RMB | 6.9 | 18.0 |
| Average desulfurization efficiency, % | 99.91 | 97.62 |
| Average Sulfur dioxide concentration in cleaned gas, mg/Nm³ | 23.6 | 680 |

### 3. Acid gas desulfurization treatment devices for a shale oil exploitation and utilization project

Acid gas comes from a shale oil exploitation and utilization project. After three-stage Claus process treatment, the total amount of acid tail gas (Claus tail gas) is 12,500 Nm³/h, the temperature is 195°C, the concentration of sulfur dioxide is 23,000 mg/Nm³ - 27,000 mg/Nm³, and the other components are nitrogen, carbon dioxide, water vapor, oxygen, etc. The pressure is 0.023 MPa (g), and the desulfurization reagent is 99.6% liquid ammonia.

The process flow diagram is shown in Figure 4. The acid gas contains 50% to 80% (by volume) hydrogen sulfide, all sulfur in the acid gas is converted to elemental sulfur and sulfur dioxide after pre-treatment, and the sulfur dioxide concentration in acid tail gas after pre-treatment meets requirement for the ammonia absorption of sulfur oxides. Compared to the bio-desulfurization process, the method for effectively removing acidic sulfide gas using ammonia-based desulfurization described in this invention is simpler and easier to control, and reduces the investment and operation cost of the device. The cleaned gas meets emission standards and the process by-produces ammonium sulfate.

The ammonia recovery in this example is over 98.5%, the average concentration of sulfur dioxide in cleaned gas is 19.4 mg/Nm³, the concentration of free ammonia is 5.1 mg/Nm³, and the desulfurization efficiency is 99.92%.

The sulfur dioxide concentration in the acid tail gas at the inlet of the absorption device and the sulfur dioxide concentration in the cleaned gas at the outlet of the absorption device using sulfur oxides ammonia absorption are as the following:

| Sulfur dioxide concentration in acid tail gas (mg/Nm³) | Sulfur dioxide concentration in cleaned gas (mg/Nm³) | Desulfurization efficiency (%) |
|---|---|---|
| 23,056 | 19.0 | 99.92 |
| 24,308 | 22.0 | 99.91 |
| 25,714 | 20.3 | 99.92 |
| 26,503 | 17.6 | 99.93 |
| 27,121 | 18.2 | 99.93 |

Process comparison is as the following:

| Process | Ammonia desulfurization | Bio-desulfurization |
|---|---|---|
| Investment, million RMB | 13.5 | 55.0 |
| Operation cost, million RMB | 3.8 | 18.0 |
| Average desulfurization efficiency, % | 99.92 | 99.5 |
| Average sulfur dioxide concentration in cleaned gas, mg/Nm³ | 19.42 | 127 |

### 4. Acid gas desulfurization treatment devices for a shale gas exploitation and utilization project

Acid gas comes from a shale gas exploitation and utilization project. After two-stage Claus process treatment, the total amount of acid tail gas (Claus tail gas) is 15,000 Nm³/h, temperature is 175°C, concentration of sulfur dioxide is 14,000 mg/Nm³ to 19,500 mg/Nm³, and the other components are nitrogen, carbon dioxide, water vapor, oxygen, etc. The pressure is 0.03 MPa (g), and the desulfurization reagent is 10% to 20% of aqueous ammonia.

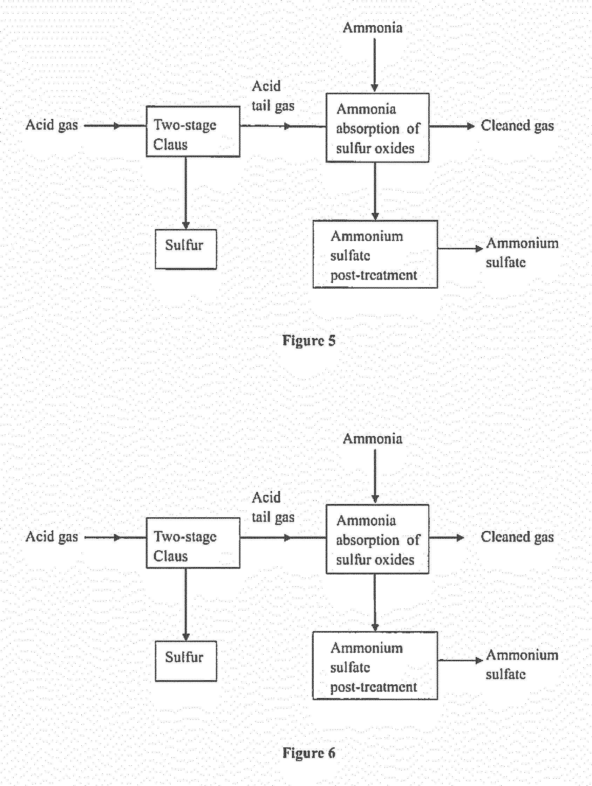

The process flow diagram is shown in Figure 5. The tail gas contains 25% to 45% (by volume) hydrogen sulfide, all sulfur in the acid gas is converted to elemental sulfur and sulfur dioxide after pre-treatment, and sulfur dioxide concentration in acid tail gas after pre-treatment meets requirement for the ammonia absorption of sulfur oxides. Compared to the low-temperature SCOT process, the method for effectively removing acidic sulfide gas using ammonia-based desulfurization described in this invention is simpler and easier to control, and reduces investment and operation cost of the device. The cleaned gas meets emission standards and the process by-produces ammonium sulfate.

The ammonia recovery in this example is over 98.0%, average concentration of sulfur dioxide in cleaned gas is 16.3 mg/Nm³, the concentration of free ammonia is 4.8 mg/Nm³, and the desulfurization efficiency is 99.90%.

The sulfur dioxide concentration in the acid tail gas at the inlet of the absorption device and sulfur dioxide concentration in the cleaned gas at the outlet of the absorption device using sulfur oxides ammonia absorption are as the following:

| Sulfur dioxide concentration in acid tail gas (mg/Nm³) | Sulfur dioxide concentration in cleaned gas (mg/Nm³) | Desulfurization efficiency (%) |
|---|---|---|
| 14,796 | 14.1 | 99.90 |
| 15,623 | 15.5 | 99.90 |
| 16,571 | 15.2 | 99.91 |
| 17,809 | 16.2 | 99.91 |
| 19,351 | 20.3 | 99.90 |

Process comparison is as the following:

| Process | Ammonia desulfurization | Low-temperature SCOT |
|---|---|---|
| Investment, million RMB | 16.0 | 36.0 |
| Operation cost, million RMB | 4.6 | 16.0 |
| Average desulfurization efficiency, % | 99.90 | 97.1 |
| Average sulfur dioxide concentration in cleaned gas, mg/Nm³ | 16.3 | 480 |

### 5. Acid gas desulfurization treatment devices for a coal to liquids (CTL) project

Acid gas comes from a coal-to-liquids project. After the two-stage Claus process treatment, the total amount of acid tail gas (Claus tail gas) is 48,000 Nm³/h, the temperature is 195°C, the concentration of sulfur dioxide is 25,000 mg/Nm³ to 29,500 mg/Nm³, and the other components are nitrogen, carbon dioxide, water vapor, oxygen, etc. The pressure is 0.023 MPa (g), and the desulfurization reagent is 8% to 32% of aqueous ammonia.

The process flow diagram is shown in Figure 6. The acid gas contains 40% to 60% (by volume) hydrogen sulfide, all sulfur in the acid gas is converted to elemental sulfur and sulfur dioxide after pre-treatment, and sulfur dioxide concentration in acid tail gas after pre-treatment meets requirement for the ammonia absorption of sulfur oxides. Compared to the Cansolv process, the method for effectively removing acidic sulfide gas using ammonia-based desulfurization described in this invention is simpler and easier to control, and reduces investment and operation cost of the device. The cleaned gas meets emission standards and the process by-produces ammonium sulfate.

The ammonia recovery in this example is over 99.0%, the average concentration of sulfur dioxide in the cleaned gas is 25.5 mg/Nm³, the concentration of free ammonia is 5.5 mg/Nm³, and the desulfurization efficiency is 99.91%.

The sulfur dioxide concentration in the acid tail gas at the inlet of the absorption device and the sulfur dioxide concentration in the cleaned gas at the outlet of the absorption device using sulfur oxides ammonia absorption are as the following:

| Sulfur dioxide concentration in acid tail gas (mg/Nm³) | Sulfur dioxide concentration in cleaned gas (mg/Nm³) | Desulfurization efficiency (%) |
|---|---|---|
| 25,187 | 23.4 | 99.91 |
| 26,658 | 22.2 | 99.92 |
| 27,320 | 26.9 | 99.90 |
| 28,654 | 25.8 | 99.91 |
| 29,429 | 29.2 | 99.90 |

### Process comparison is as the following:

| Process | Ammonia desulfurization | Cansolv |
|---|---|---|
| Investment, million RMB | 34.0 | 89.0 |
| Operation cost, million RMB | 12.0 | 46.0 |
| Average desulfurization efficiency, % | 99.91 | 99.72 |
| Average sulfur dioxide concentration in cleaned gas, mg/Nm³ | 25.5 | 84 |

### 6. Acid gas desulfurization treatment devices for a natural gas exploitation project

Acid gas comes from a natural gas exploitation project. After the one-stage Claus process treatment, the total amount of acid tail gas (Claus tail gas) is 36,000 Nm³/h, the temperature is 155°C, the concentration of sulfur dioxide is 22,500 mg/Nm³ to 26,500 mg/Nm³, and the other components are nitrogen, carbon dioxide, water vapor, oxygen, etc. The pressure is 0.03 MPa (g), and the desulfurization reagent is 5% to 35% aqueous ammonia.

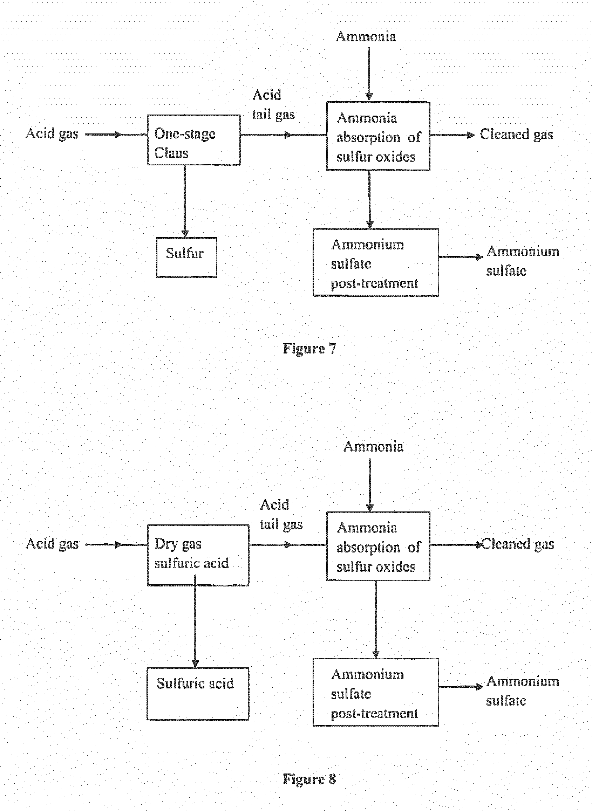

The process flow diagram is shown in Figure 7. The acid gas contains 15% to 30% (by volume) hydrogen sulfide, all sulfur in the acid gas is converted to sulfur and sulfur dioxide after pre-treatment, and sulfur dioxide concentration in the acid tail gas after pre-treatment meets requirements for the ammonia absorption of sulfur oxides. Compared to the wet gas sulfuric acid + alkali absorption process, the method for effectively removing acidic sulfide gas using ammonia-based desulfurization described in this invention is simpler and easier to control, and reduces investment and operation cost of the device. The cleaned gas meets emission standards and the process by-produces ammonium sulfate.

The ammonia recovery in this example is over 99.0%, the average concentration of sulfur oxides in cleaned gas is 19.4 mg/Nm³, the concentration of free ammonia is 4.2 mg/Nm³, and the desulfurization efficiency is 99.92%.

The sulfur dioxide concentration in the acid tail gas at the inlet of the absorption device and sulfur dioxide concentration in the cleaned gas at the outlet of the absorption device using sulfur oxides ammonia absorption are as the following:

| Sulfur dioxide concentration in acid tail gas (mg/Nm³) | Sulfur dioxide concentration in cleaned gas (mg/Nm³) | Desulfurization efficiency (%) |
|---|---|---|
| 22,577 | 19.0 | 99.92 |
| 23,920 | 19.2 | 99.92 |
| 24,669 | 18.3 | 99.93 |
| 25,783 | 20.6 | 99.92 |
| 26,286 | 19.7 | 99.93 |

Process comparison is as the following:

| Process | Ammonia desulfurization | Wet gas sulfuric acid + alkali absorption |
|---|---|---|
| Investment, million RMB | 27.6 | 134.0 |
| Operation cost, million RMB | 7.3 | 8.8 |
| Average desulfurization efficiency, % | 99.92 | 99.8 |
| Average SO₂ concentration of cleaned gas, mg/Nm³ | 19.36 | 37 |

### 7. Acid gas desulfurization treatment devices for a chemical project

Acid gas comes from a chemical project. After the two-stage dry gas sulfuric acid conversion pre-treatment, the total amount of acid tail gas is 128,000 Nm³/h, the temperature is 145°C, the concentration of sulfur oxides is 18500 mg/Nm³ to 23,000 mg/Nm³, and the other components are nitrogen, carbon dioxide, water vapor, oxygen, etc. The pressure is 0.023 MPa (g), and the desulfurization reagent is 99.6% liquid ammonia.

The process flow diagram is shown in Figure 8. The acid gas contains 75% to 90% (by volume) hydrogen sulfide, all sulfur in the acid gas is converted to sulfuric acid and sulfur dioxide after the pre-treatment, and sulfur oxide concentration in acid tail gas after pre-treatment meets the requirements for the ammonia absorption of sulfur oxides. Compared to the catalyst upgrade + alkali cleaning process, the method for effectively removing acidic sulfide gas using ammonia-based desulfurization described in this invention is simpler and easier to control, and reduces investment and operation cost of the device. The cleaned gas meets emission standards and the process by-produces ammonium sulfate.

The ammonia recovery in this example is over 98.5%, the average concentration of sulfur oxides in the cleaned gas is 17.4 mg/Nm³, the concentration of free ammonia is 3.5 mg/Nm³, and the desulfurization efficiency is 99.92%.

The sulfur oxide concentration in the acid tail gas at the inlet of the absorption device and the sulfur oxide concentration in the cleaned gas at the outlet of the absorption device are as the following:

| Sulfur oxides concentration in acid tail gas (mg/Nm³) | Sulfur oxides concentration in cleaned gas (mg/Nm³) | Desulfurization efficiency (%) |
|---|---|---|
| 18,569 | 16.3 | 99.91 |
| 19,326 | 15.4 | 99.92 |
| 20,850 | 19.2 | 99.91 |
| 21,432 | 17.3 | 99.92 |
| 22,857 | 18.6 | 99.92 |

Process comparison list is as the followings:

| Process | Ammonia desulfurization | Catalyst upgrade + alkali cleaning |
|---|---|---|
| Investment, million RMB | 21.9 | 38.0 |
| Operation cost, million RMB | 7.0 | 25.0 |
| Average desulfurization efficiency, % | 99.92 | 99.8 |
| Average sulfur oxide concentration in cleaned gas, mg/Nm³ | 17.4 | 48 |

### 8. Acid gas desulfurization treatment devices for a papermaking project

Acid gas comes from a papermaking project. After the one-stage wet gas sulfuric acid conversion pre-treatment, the total amount of acid tail gas is 330,000 Nm³/h, the temperature is 155°C, the concentration of sulfur oxides is 25,000 mg/Nm³ to 29,000 mg/Nm³, and the other components are nitrogen, carbon dioxide, water vapor, oxygen, etc. The pressure is 0.03 MPa (g), and the desulfurization reagent is 99.6% liquid ammonia.

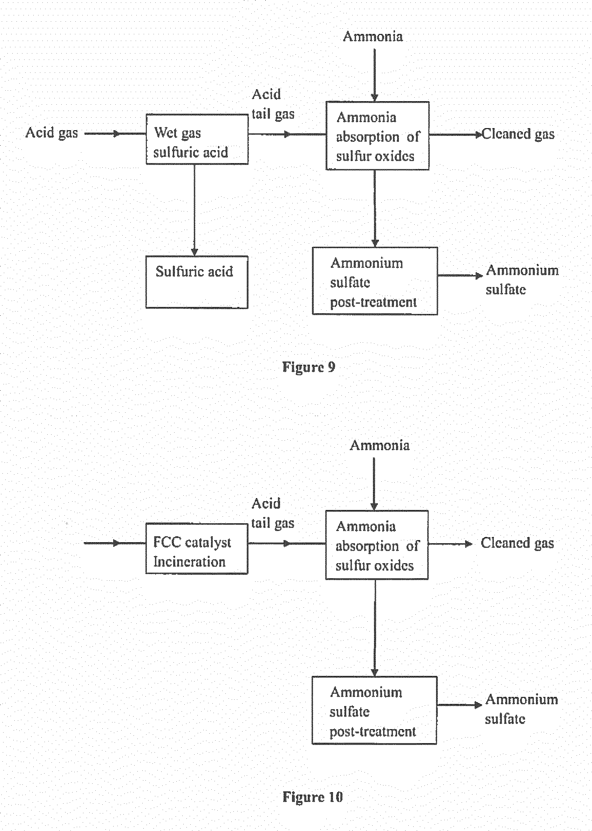

The process flow diagram is shown in Figure 9. The acid gas contains 35% to 45% (by volume) hydrogen sulfide, all sulfur in the acid gas is converted to sulfuric acid and sulfur dioxide after the pre-treatment, and the sulfur dioxide concentration in the acid tail gas after the pre-treatment meets the requirements for the ammonia absorption of sulfur oxides. Compared to the additional one-stage conversion + tail gas activated carbon catalytic oxidation process (namely two-stage wet gas sulfuric acid conversion + tail gas activated carbon catalytic oxidation process), the method for effectively removing acidic sulfide gas using ammonia-based desulfurization described in this invention is simpler and easier to control, and reduces investment and operation cost of the device. The cleaned gas meets emission standards without generating waste gas, waste water or waste solids and the process by-produces ammonium sulfate.

The ammonia recovery in this example is over 98%, the average concentration of sulfur oxides in the cleaned gas is 23.4 mg/Nm³, the concentration of free ammonia is 2.4 mg/Nm³, and the desulfurization efficiency is 99.91%.

The sulfur oxide concentration in the acid tail gas at the inlet of the absorption device and the sulfur oxide concentration in the cleaned gas at the outlet of the absorption device is as the following:

| Sulfur oxides concentration in acid tail gas (mg/Nm³) | Sulfur oxides concentration in cleaned gas (mg/Nm³) | Desulfurization efficiency (%) |
|---|---|---|
| 25,220 | 22.6 | 99.91 |
| 26,633 | 23.3 | 99.91 |
| 27,543 | 22.8 | 99.92 |
| 28,197 | 24.1 | 99.91 |
| 29,143 | 24.2 | 99.92 |

Process comparison is as the following:

| Process | Ammonia desulfurization | Two-stage wet gas sulfuric acid conversion + tail gas activated carbon catalytic oxidation |
|---|---|---|
| Investment, million RMB | 32.4 | 85.0 |
| Operation cost, million RMB | 7.7 | 30.0 |
| Average desulfurization efficiency, % | 99.91 | 99.6 |
| Average sulfur oxide concentration in cleaned gas, mg/Nm³ | 23.4 | 126 |

### 9. Acid gas desulfurization treatment devices for an oil refining project

Acid gas is the FCC regeneration flue gas from an oil refining project. After the incineration regeneration of the catalyst, the total amount of acid tail gas is 70,000 Nm³/h, temperature is 180°C, the concentration of sulfur dioxide is 2,900 mg/Nm³ to - 4,200 mg/Nm³, and the other components are nitrogen, carbon dioxide, water vapor, oxygen, etc. The pressure is 0.002 MPa (g), and the desulfurization reagent is 10% to 30% aqueous ammonia.

The process flow diagram is shown in Figure 10. All sulfur in the acid gas is converted to sulfur dioxide after catalyst incineration regeneration, and the sulfur dioxide concentration in the acid tail gas after the pre-treatment meets the requirements for the ammonia absorption of sulfur oxides. Compared to the Belco technology, the method for effectively removing acidic sulfide gas using ammonia-based desulfurization described in this invention is simpler and easier to control, and reduces investment and operation cost of the device. The cleaned gas meets emission standards the process by-produces ammonium sulfate.

The ammonia recovery in this example is over 98.5%, the average concentration of sulfur dioxide in the cleaned gas is 3.1 mg/Nm³, the concentration of free ammonia is 1.9 mg/Nm³, and the desulfurization efficiency is 99.91%.

The sulfur dioxide concentration in the acid tail gas at the inlet of the absorption device and the sulfur dioxide concentration in the cleaned gas at the outlet of the absorption apparatus using sulfur oxides ammonia absorption is as the following:

| Sulfur dioxide concentration in acid tail gas (mg/Nm³) | Sulfur dioxide concentration in cleaned gas (mg/Nm³) | Desulfurization efficiency (%) |
|---|---|---|
| 2,983 | 2.3 | 99.92 |
| 3,057 | 3.1 | 99.90 |
| 3,429 | 2.9 | 99.92 |
| 3,782 | 3.5 | 99.91 |
| 4,150 | 3.6 | 99.91 |

Process comparison is as the following:

| Process | Ammonia desulfurization | Belco technology |
|---|---|---|
| Investment, million RMB | 25.1 | 69.0 |
| Operation cost, million RMB | 4.7 | 21.0 |
| Average desulfurization efficiency, % | 99.91 | 98.95 |
| Average sulfur dioxide concentration of cleaned gas, mg/Nm³ | 3.1 | 36 |

In conclusion, this invention is a method for effectively removing acidic sulfide gas using ammonia-based desulfurization. Technical parts which is not referred in this invention are the same with the prior art or can be achieved by using the prior art.

Those described above are only preferred embodiments of this invention. It is to be noted that several improvements or modifications can be carried out for the person skilled in the art without departing from the principle of this invention, and such improvements and modifications should also be considered as the scope protected by this invention.

## Claims

1. A method for effectively removing acidic sulfide gas using ammonia-based desulfurization, **characterized by** comprising the following steps of:
1) pre-treatment, wherein sulfide in acid gas undergoes pre-treatment in the sulfur recovery unit, acid making or/and incineration to convert remaining sulfur into sulfur oxides, and acid tail gas with sulfur oxides is obtained; and the acid gas is derived from industrial tail gas of petrochemical industry, natural gas chemical industry, coal chemical industry, shale oil chemical industry, shale gas chemical industry, and sulfuric acid industry;
2) ammonia absorption of sulfur oxides, wherein the acid tail gas with sulfur oxides is allowed to flow into an ammonia absorbing apparatus, a circulation absorption solution is used to absorb sulfur oxides, parameters of the absorption solution are adjusted according to the removal amount of sulfur oxides and the concentration of sulfur oxides, and the treated cleaned gas is discharged upon meeting the emission standard;
3) post-treatment of ammonium sulfate, wherein a saturated or nearly saturated absorption solution fully absorbing sulfur oxides undergoes concentration, crystallization, solid-liquid separation, and drying to obtain a solid product of ammonium sulfate.

2. The method for effectively removing acidic sulfide gas using ammonia-based desulfurization according to claim 1, **characterized in that** the concentration of sulfur oxides in the acid tail gas is 500 to 30000 mg/Nm³, the concentration of sulfur oxides in the cleaned gas is less than 50 mg/Nm³, the concentration of free ammonia is less than 10 mg/Nm³, the ammonia recovery is more than 97%, and the desulfurization efficiency of an ammonia desulfurization device is 99.9% or more.

3. The method for effectively removing acidic sulfide gas using ammonia-based desulfurization according to claim 1, **characterized in that** parameters of the absorption solution such as composition, density and circulation flow are adjusted according to differences in the concentration of sulfur oxides and the absorption amount of sulfur oxides.

4. The method for effectively removing acidic sulfide gas using ammonia-based desulfurization according to claim 1, **characterized in that** the pre-treatment of the acid gas includes conventional Claus technology, dry gas sulfuric acid technology, incineration technology, FCC regeneration flue gas technology, wet gas sulfuric acid technology, SuperClaus technology, or EuroClaus technology; the acid tail gas is sulfur recovery tail gas, sulfuric acid tail gas, incineration flue gas, or FCC regeneration flue gas.

5. The method for effectively removing acidic sulfide gas using ammonia-based desulfurization according to claim 1, **characterized in that** when the concentration of sulfur oxides in the H₂S-free acid gas is less than 30,000 mg/Nm³, the gas flows into the ammonia absorbing apparatus directly without pre-treatment.

6. The method for effectively removing acidic sulfide gas using ammonia-based desulfurization according to claim 4, **characterized in that** the acid gas is from a coal-to-methanol or coal-to-acetic acid project, a coal-to-SNG (Synthetic Natural Gas) project, and a shale gas or oil exploitation and utilization project or a natural gas exploitation project, wherein the acid tail gas obtained after pre-treatment undergoes ammonia desulfurization again within the scope of ammonia-based desulfurization, and wherein the desulfurization reagent is 5% to 35% aqueous ammonia or liquid ammonia.

7. The method for effectively removing acidic sulfide gas using ammonia-based desulfurization according to claim 4, **characterized in that** the absorber adjusts parameters such as the composition and the recycle amount of the absorption solution according to differences in the removal amount and the concentration of sulfur oxides in the acid tail gas, and the absorption solution in which the removal of sulfur oxides is complete undergoes oxidation, concentration and crystallization so as to flow into an ammonium sulfate post-treatment system.

8. The method for effectively removing acidic sulfide gas using ammonia-based desulfurization according to claim 4, **characterized in that** in order to coordinate with the whole process, absorption solution oxidization and concentration, as well as aerosol control are carried out in the absorber.

9. The method for effectively removing acidic sulfide gas using ammonia-based desulfurization according to claim 4, **characterized in that** the acid gas comes from a coal-to-gas (or coking) device, and the pre-treatment of the acid gas is one of Claus processing technologies from one-stage to three-stage.
